# EUROPÄISCHE PATENTSCHRIFT

(11) **EP 1 625 809 B1**
(45) Veröffentlichungstag und Bekanntmachung des Hinweises auf die Patenterteilung: **21.04.2010**
(21) Anmeldenummer: 05015623.1
(22) Anmeldetag: 06.02.2001
(51) Int. Cl.: A46B 5/00, A46D 3/00, A61C 17/16

(54) **Verfahren zum Herstellen eines Handgriffes für ein Körperpflegegerät, insbesondere für ein Zahnreinigungsgerät**
Method for producing a handle for a body care apparatus, particularly for a teeth cleaning device
Procédé de production d'un manche destiné à un appareil pour soins corporels, particulièrement pour une brosse à dents

(30) Priorität: 09.02.2000 DE 10005738
(43) Veröffentlichungstag der Anmeldung: 15.02.2006
(62) Teilanmeldung aus: 01951113.8
(73) Patentinhaber: Trisa Holding AG, 6234 Triengen (CH)
(72) Erfinder: Pfenniger, Philipp, 6234 Triengen (CH); Huber, Beat, 6233 Büron (CH)
(74) Vertreter: Schaad, Balass, Menzl & Partner AG

(56) Entgegenhaltungen:
- DE-A1- 4 241 409
- DE-U1- 29 817 994
- FR-A- 1 341 439
- US-A- 5 934 762

## Beschreibung

Die vorliegende Erfindung betrifft ein Verfahren zum Herstellen eines Handgriffes für ein Körperpflegegerät, insbesondere für ein Zahnreinigungsgerät, gemäss Oberbegriff des Anspruches 1 sowie einen Handgriff gemäss Oberbegriff des Anspruches 23.

Aus der DE-U-298 17 994.6 ist ein Zahnreinigungsgerät bekannt, bei dem der Handgriff aus zwei in getrennten Schritten hergestellten Griffteilen besteht, von denen zumindest ein Griffteil schalenförmig ausgebildet ist. Die beiden Griffteile sind entlang der gemeinsamen Trennfuge miteinander verschweisst und somit unlösbar miteinander verbunden. Auch ein Verkleben der Griffteile wird vorgeschlagen.

Aus der FR-A-1.341.439 ist eine Zahnbürste bekannt, bei der die beiden Schalen des Handgriffs lösbar miteinander verbunden sind. Die eine, erste Schale weist eine Nut auf, in die im zusammengebauten Zustand der beiden Schalen ein Vorsprung an der andern, zweiten Schale eingreift. Die beiden Schalen werden mittels einer Schraube zusammengehalten. In die Nut der ersten Schale ist ein Dichtkörper eingelegt, weicher den Hohlraum im Handgriff gegen außen abdichtet. Der Hohlraum im zweiteiligen Handgriff wird somit dadurch abgedichtet, dass in die Trennfuge zwischen den lösbar miteinander verbundenen Schalen ein Dichtkörper eingelegt wird, ohne dabei die Trennbarkeit der Schalen zu beeinträchtigen.

In der US-A-5,934,762 ist ein Verfahren zum Herstellen eines Zahnreinigungsgerätes beschrieben, bei dem zuerst die einzelnen Zahnbürstenkomponenten, nämlich ein Handgriff, zwei Bürstenteile sowie gegebenenfalls ein dritter Bürstenteil, getrennt voneinander hergestellt werden. In einem weiteren Schritt werden die beiden Bürstenteile mit dem einen Ende des Handgriffes zusammengebracht. Die so zusammengebrachten Teile werden anschließend mit einem gummielastischen Kunststoffmaterial umspritzt, das diese Teile in einem gemeinsamen Bereich vollständig umschließt und so fest zusammenhält. Die einzeln hergestellten Teile werden somit zuerst zusammengefügt und _ dann in einem gemeinsamen Bereich vollständig mit einem weichelastischen Kunststoff umspritzt, um so die Teile fest und unlösbar miteinander zu verbinden.

Um aus Kunststoff bestehende Griffteile richtig miteinander verschweissen zu können setzt voraus, dass die Griffteile aus verschweissbaren Kunststoffen, d.h. aus Kunststoffen der gleichen Familie, bestehen, was die Auswahlmöglichkeit für die zu verwendenden Kunststoffe einschränkt.

Der vorliegenden Erfindung liegt nun die Aufgabe zu Grunde, ein Verfahren der eingangs genannten Art zu schaffen, das es erlaubt, Griffteile aus den verschiedensten Materialien auf einfache Weise zusammenzufügen und unlösbar miteinander zu verbinden.

Diese Aufgabe wird erfindungsgemäss durch ein Verfahren mit den Merkmalen des Anspruches 1 gelöst.

Dadurch, dass die gemeinsame Trennfuge zwischen den zusammengefügten Griffteilen im Spritzgiessverfahren mit einem thermoplastischen Kunststoffmaterial ausgefüllt wird, wird auf einfache Weise eine von Hand nicht mehr lösbare Verbindung von hoher Qualität zwischen den Griffteilen erhalten.

Der eingangs erwähnte Handgriff für ein Körperpflegegerät, der insbesondere nach dem erfindungsgemässen Verfahren hergestellt ist, zeichnet sich aus durch die Merkmale des Anspruches 23.

Bevorzugte Weiterausgestaltungen des erfindungsgemässen Verfahrens bzw. des erfindungsgemässen Handgriffes bilden Gegenstand der abhängigen Ansprüche 2 bis 22 bzw. 24 bis 43.

Im folgenden wird der Erfindungsgegenstand anhand der Zeichnungen näher erläutert. Es zeigen rein schematisch:
- Fig. 1;: in Seitenansicht eine Zahnbürste ohne Bürstenkopf mit voneinander getrennten Griffteilen,
- Fig. 2;: in Seitenansicht und teilweise im Schnitt die aus den beiden Griffteilen gemäss Fig. 1 zusammengesetzte Zahnbürste,
- Fig. 3;: einen Schnitt entlang der Linie III-III in Fig. 2,
- Fig. 4 und 5;: die Spritzgussform zum Herstellen der Verbindungsnaht zwischen den Griffteilen,
- Fig. 6;: einen Querschnitt durch den aus den beiden zusammengefügten und miteinander verbundenen Griffteilen bestehenden Handgriff,
- Fig. 7;: in einer der Fig. 6 entsprechenden Darstellung, jedoch in vergrössertem Massstab, eine andere Ausbildung der Verbindung zwischen den Griffteilen,
- Fig. 8;: in einer der Fig. 7 entsprechenden Darstellung eine weitere Ausbildung der Verbindung zwischen den Griffteilen,
- Fig. 9;: in Seitenansicht und in einer der Fig. 1 entsprechenden Darstellung eine andere Ausführungsform einer Zahnbürste vor dem Zusammenfügen der Griffteile,
- Fig. 10;: in Seitenansicht die Zahnbürste gemäss Fig. 8 in zusammengebautem Zustand, und
- Fig. 11;: die Spritzgussform zum Herstellen der Griffteile und der Verbindungsnaht.

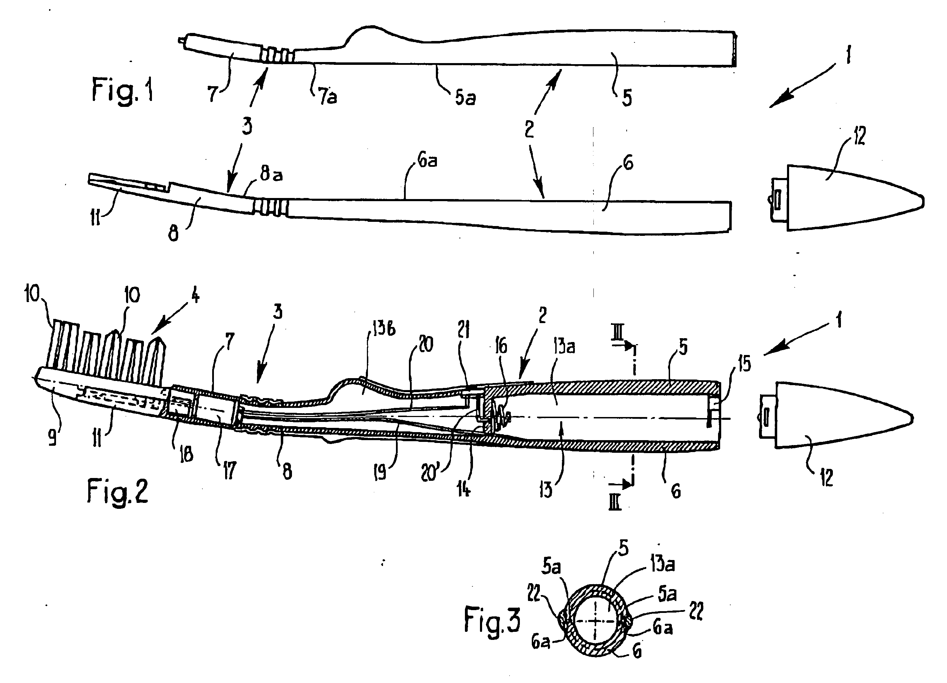

Vorerst wird anhand der Figuren 1-3 der Aufbau eines erfindungsgemäss hergestellten Zahnreinigungsgerätes, nämlich einer elektrisch angetriebenen Zahnbürste 1, beschrieben.

Die Zahnbürste 1 weist einen Handgriff 2 auf, der in einen Hals 3 übergeht, an dem ein Bürstenkopf 4 befestigt ist. Der Handgriff 2 besteht aus zwei Griffteilen 5 und 6, von denen zumindest der Griffteil 5 und vorzugsweise auch der Griffteil 6 schalenförmig ausgebildet ist. Der Hals 3 wird durch zwei Halsteile 7, 8 gebildet, die mit dem zugeordneten Griffteil 5 bzw. 6 einstückig ausgebildet sind. Die beiden Halsteile 7, 8 sind ebenfalls schalenförmig ausgebildet. Der Bürstenkopf 4 (Fig. 2) weist einen Borstenträger 9 auf, von dem auf bekannte Weise Borstenbündel 10 abstehen. Der Borstenträger 9 ist lösbar auf einen Fortsatz 11 des Halsteiles 8 aufgesetzt. Beim vorliegenden Ausführungsbeispiel ist somit der Bürstenkopf 4 auswechselbar. Selbstverständlich ist es auch möglich, den Borstenträger 9 mit dem Halsteil 8 einstückig auszubilden, was in diesem Fall bedeutet, dass der Bürstenkopf 4 nicht auswechselbar ist. Am hintern Ende des Handgriffes 2 ist eine Verschlusskappe 12 vorgesehen, die einen durch die beiden schalenförmigen Griffteile 5 und 6 festgelegten Hohlraum 13 abschliesst. Die Verschlusskappe 12 ist beim vorliegenden Ausführungsbeispiel mittels eines Bajonettverschlusses festgehalten. Es ist jedoch auch möglich, die Verschlusskappe 12 z.B. aufschraubbar auszugestalten.

Der durch die Griff- und Halsteile 5, 6, 7, 8 festgelegte Hohlraum 13 wird durch eine am Griffteil 5 angeformte Querwand 14 in einen hinteren Hohlraum 13a und einen vorderen Hohlraum 13b unterteilt. In der Fig. 2 ist mit 15 eine auf der Innenseite der Griffteile 5, 6 vorgesehene Rastnut bezeichnet, die zur erwähnten Bajonettverbindung gehört, mittels der die Verschlusskappe 12 am Handgriff 2 lösbar festgehalten ist. Der hintere Hohlraum 13a dient zur Aufnahme einer nicht dargestellten Batterie, die sich am einen Ende an der Verschlusskappe 12 und am andern Ende an einer Kontaktfeder 16 abstützt, die an der Querwand 14 befestigt ist. Im Hals 3 ist ein Mikromotor 17 untergebracht, der mit einem Vibrationselement 18, z. B. einem Schwinganker, verbunden ist, der dazu dient, den Bürstenkopf 4 in Schwingung zu versetzen. Der Mikromotor ist über eine elektrische Verbindungsleitung 19 über die Verschlusskappe 12 mit dem einen Pol der Batterie im hinteren Hohlraum 13a verbunden. Eine weitere Verbindungsleitung 20 verbindet den Mikromotor 17 mit einem im Griffteil 5 vorgesehenen, von Hand betätigbaren Schalter 21, der über eine Verbindungsleitung 20' mit der Kontaktfeder 16, die mit dem andern Pol der Batterie in Kontakt steht, verbunden ist. Durch Betätigung des Schalters 21 wird der Mikromotor 17 ein- und ausgeschaltet. Für die Halterung bzw. Positionierung der verschiedenen elektrischen und mechanischen Teile des Antriebes für den Bürstenkopf 4 sind an wenigstens einem Griff- bzw. Halsteil 5, 7 oder 6, 8 Positionier- oder Halteteile, so z.B. die Querwand 14, vorgesehen.

Der Handgriff 2 und der Hals 3 bestehen vorzugsweise aus demselben Material und entweder aus demselben Kunststoff wie der Borstenträger 9 oder aus einem andersartigen Kunststoff. Vorzugsweise werden die Griff- und Halsteile 5, 7 bzw. 6, 8 im Ein- oder Mehrkomponentenspritzgiessverfahren hergestellt.

Wie aus den Figuren 1 und 2 hervorgeht werden die Griff- und Halsteile 5, 7 sowie 6, 8 in separaten Schritten hergestellt und dann zusammengefügt. Dabei bilden die Endflächen 5a, 7a und 6a, 8a der aneinander liegenden Teile 5, 7 und 6, 8 eine Trennfuge, die auf noch zu beschreibende Weise mittels einer Verbindungsnaht 22 (Fig. 3) verschlossen wird.

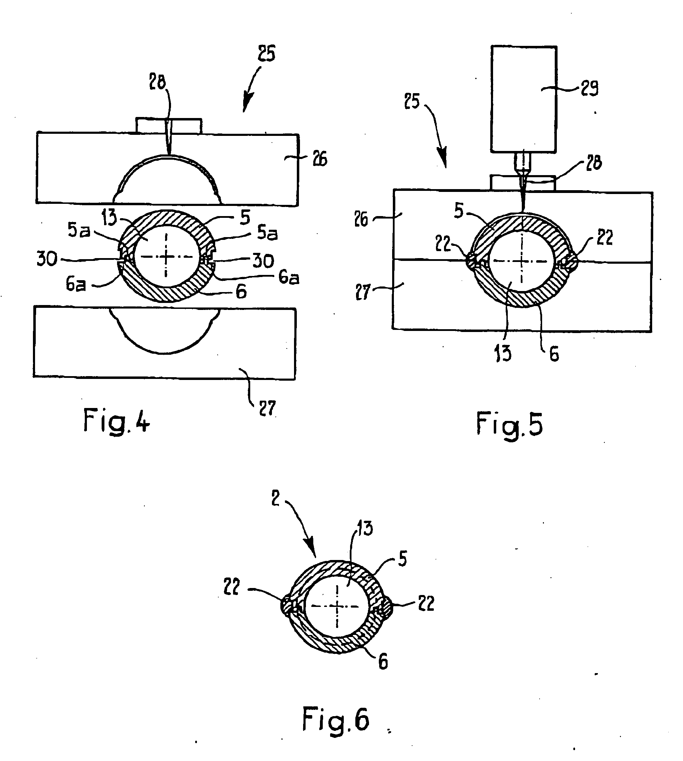

Anhand der Figuren 4-6 wird nun das Verfahren zur Herstellung einer Zahnbürste von der in den Figuren 1-3 gezeigten Art beschrieben.

Die wie erwähnt in separaten Schritten und z.B. an räumlich getrennten Orten hergestellten Griffteile 5, 6 mit angeformten Halsteilen 7 bzw. 8 werden zum fertigen Handgriff 2 mit Hals 3 zusammengefügt. Die zusammengefügten und gegebenenfalls durch zusätzliche mechanische Mittel zusammengehaltenen Griffteile 5, 6 werden dann in eine Spritzgussform 25 eingelegt, wie das in Fig. 4 dargestellt ist. Von dieser Spritzgussform 25 sind die beiden Formhälften 26 und 27 rein schematisch dargestellt. Mit 28 ist eine in der oberen Formhälfte 26 vorgesehene Einspritzöffnung bezeichnet. Die einander zugekehrten Endflächen 5a und 6a sowie die Endflächen 7a, 8a der Halsteile 7 und 8 legen eine Trennfuge 30 fest. Nach dem Schliessen der Spritzgussform 25, d.h. dem Zusammenbringen der beiden Formhälften 26, 27, wird mittels einer nur schematisch dargestellten Spritzeinheit 29 ein Kunststoffmaterial in den Formhohlraum der Spritzgussform 25 eingespritzt (Fig. 5). Die eingespritzte Kunststoffmasse verschliesst die Trennfuge 30 zwischen den Griff- und Halsteilen 5, 6, 7, 8 auf ihrer ganzen Länge oder nur über einen Teil ihrer Länge und bildet dann die Verbindungsnaht 22. In Fig. 6 ist der fertig und aus der Spritzgussform 25 entfernte Handgriff 2 im Querschnitt dargestellt.

Im beschriebenen Ausführungsbeispiel werden für die Griff- und Halsteile 5, 6, 7, 8 und die Verbindungsnaht 22 affine Kunststoffe verwendet, d.h. Kunststoffe, die beim Spritzgiessvorgang miteinander eine Materialverbindung eingehen. Dies ist z.B. dann der Fall, wenn für die Griff- und Halsteile 5, 6, 7, 8 Polypropylen (PP) und für die Verbindungsnaht 22 ein entsprechender thermoplastischer Kunststoff, vorzugsweise ein thermoplastisches Elastomer, verwendet wird. Eine solche Materialverbindung ergibt sich auch dann, wenn die Griff- und Halsteile 5, 6, 7, 8 aus SAN (Styrol-Acrylnitril) bestehen und für die Bildung der Verbindungsnaht 22 ein entsprechender thermoplastischer Kunststoff, z.B. ein geeignetes thermoplastisches Elastomer verwendet wird.

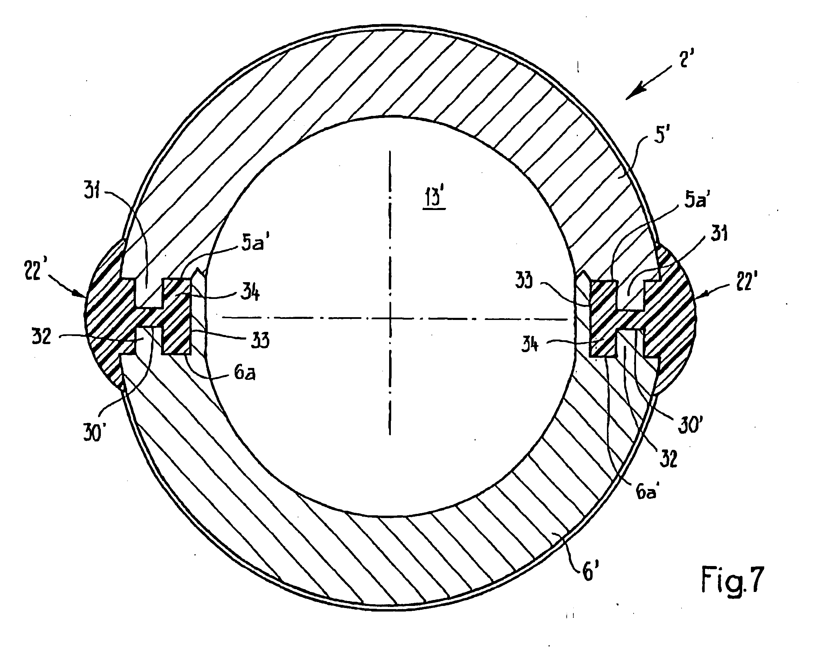

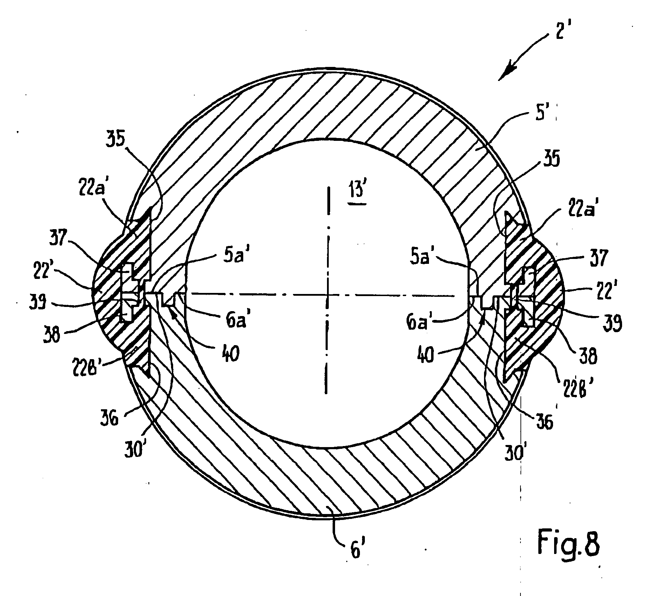

Das erfindungsgemässe Verfahren, d.h. das Verschliessen der Trennfuge 30 zwischen den Griff- bzw. Halsteilen 5, 6, 7, 8 im Spritzgiessverfahren, hat den Vorteil, dass auf diese Weise auch Griff- bzw. Halsteile miteinander verbunden werden können, die aus Kunststoffen bestehen, die zum Kunststoff, der für die Verbindungsnaht 22 verwendet wird, nicht affin sind. Dies ist z.B. dann der Fall, wenn der eine Griff- bzw. Halsteil 5, 7 aus Polypropylen (PP) und der andere Griffteil 6, 8 aus SAN besteht und zur Bildung der Verbindungsnaht 22 ein thermoplastisches Elastomer verwendet wird, das entweder mit PP oder SAN eine Materialverbindung eingeht und mit dem andern Kunststoff nicht. In solchen Fällen entsteht keine Materialverbindung zwischen den Teilen, was eine andere Ausgestaltung der Verbindungsnaht und/oder der Griff- bzw. Halsteile verlangt. Solche Ausführungsformen werden nun anhand der Fig. 7 und 8 beschrieben, in denen ein Handgriff 2' im Querschnitt gezeigt ist.

Bei der in der Fig. 7 gezeigten Ausführungsform sind in den einander zugekehrten, die Trennfuge 30' festlegenden Endflächen 5a', 6a' vorzugsweise leistenförmige Vorsprünge 31, 32 ausgebildet, die vom Kunststoffmaterial der Verbindungsnaht 22' umgeben sind. Die einander gegenüber liegenden Vorsprünge 31, 32 bilden einen Hohlraum 33, in den die eingespritzte Kunststoffmasse eindringen kann. In der Fig. 7 ist der in diesem Raum 33 liegende Teil der Verbindungsnaht 22' mit 34 bezeichnet.

Durch diese Ausbildung ergibt sich eine mechanische, d.h. form- und kraftschlüssige Verbindung zwischen den Griffteilen 5', 6' und der Verbindungsnaht 22'. Selbstverständlich kann die form- oder kraftschlüssige Verbindung zwischen den Griffteilen 5 ', 6 ' und der Verbindungsnaht 22' auch auf andere Weise erzeugt werden, z.B. durch Vorsehen von Vertiefungen in den Endflächen 5a' und 6a' der Griffteile 5 ', 6 ', die dann mit dem Kunststoffmaterial der Verbindungsnaht 22' gefüllt werden.

Beim Ausführungsbeispiel gemäss der Fig. 8 sind benachbart zur Trennfuge 30' in den beiden Griffteilen 5 ', 6 ' Ausnehmungen 35 bzw. 36 vorhanden, die mit dem Kunststoffmaterial der Verbindungsnaht 22' gefüllt sind. Dabei hintergreifen die in diesen Ausnehmungen 35, 36 liegenden Teile 22a', 22b' der Verbindungsnaht 22' leistenartige Vorsprünge 37 bzw. 38 der Griffteile 5 ', 6 '. Die sich jeweils gegenüberliegenden Ausnehmungen 35, 36 in den Griffteilen 5 ', 6 ' sind jeweils über einen Teil der Länge der Trennfuge 30' mittels Durchlässen 39 miteinander verbunden, die mit dem Kunststoffmaterial der Verbindungsnaht 22' gefüllt sind. Zum Zusammenhalten der zusammengefügten Griffteile 5 ', 6 ' vor dem Ueberspritzen entlang der Trennfuge 30' sind im Bereich der einander zugekehrten Endflächen 5a ', 6a ' der Griffteile 5 ', 6 ' mechanische Zentrier- oder Halteanordnungen 40 vorhanden, die beim Ausführungsbeispiel gemäss Fig. 8 in der Art von Nut-Feder-Verbindungen ausgebildet sind. Zu diesen Nut-Feder-Verbindungen gehören vorzugsweise leistenartige Vorsprünge im einen Griffteil 5 ', die in gegengleich ausgebildete Nuten im andern Griffteil 6 ' eingreifen.

Eine derartige mechanische Verbindung zwischen den Griffteilen 5 ', 6 ' ermöglicht es auch, einen Griffteil oder beide Griffteile aus einem andern Material herzustellen als aus Kunststoff, z.B. aus einem Metall wie z.B. Buntmetall oder Aluminium oder gar aus Holz.

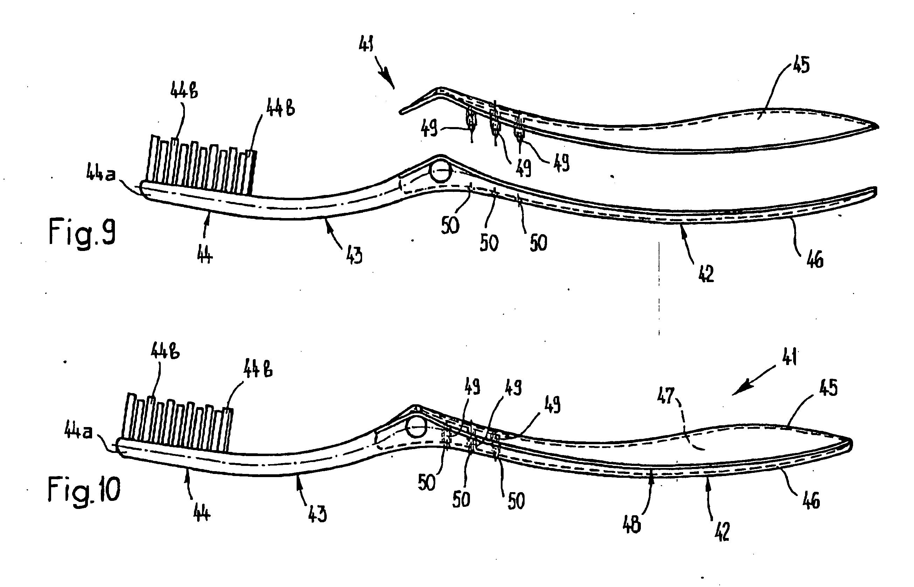

Mit dem anhand der Figuren 4-7 erläuterten Verfahren lassen sich auch Zahnbürsten, die anders als die Zahnbürste gemäss den Figuren 1-3 ausgestaltet sind, herstellen, wie das nun unter Bezugnahme auf die Figuren 9 und 10 beispielhaft erläutert wird.

Die in diesen Figuren 9 und 10 gezeigte Zahnbürste 41 besteht aus einem Handgriff 42, einem Hals 43 und einem Bürstenkopf 44. Letzterer weist einen mit dem Hals 43 einstückigen Borstenträger 44a auf, der mit Borstenbündeln 44b bestückt ist. Der Handgriff 42 besteht aus einem schalenförmig ausgebildeten oberen Griffteil 45 und einem unteren Griffteil 46, der mit dem Hals 43 einstückig ist und auch schalenförmig ausgebildet sein kann. Die beiden Griffteile 45, 46 legen einen Hohlraum 47 fest. Nach dem Zusammenfügen der beiden Griffteile 45, 48 wird die Trennfuge wie bereits beschrieben im Spritzgiessverfahren mittels eines Kunststoffmaterials verschlossen. Die dabei gebildete Verbindungsnaht ist mit 48 (Fig. 10) bezeichnet.

Die beiden Griffteile 45, 46 werden vor dem Ueberspritzen der Trennfuge mit dem Kunststoffmaterial durch mechanische Mittel gegenseitig positioniert und zusammengehalten. Hierzu ist der obere Griffteil 45 mit nach unten abstehenden, stiftartigen Nocken 49 versehen, die bei zusammengefügten Griffteilen 45, 46 in Oeffnungen 50 einrasten, die im unteren Griffteil 46 vorgesehen sind.

Die beiden Griffteile 45, 46 werden in getrennten Schritten hergestellt. Bestehen die Griffteile 45, 46 aus Kunststoff, so erfolgt deren Herstellung vorzugsweise im Ein- oder Mehrkomponentenspritzgiessverfahren.

Nach dem Zusammenfügen der Griffteile 45, 46 wird der Handgriff 42 in einer Spritzgussform im Bereich der Trennfuge zwischen den Griffteilen 45, 46 von einem Kunststoffmaterial überspritzt, wie das anhand der Figuren 4-6 erläutert worden ist.

Bei den vorstehend beschriebenen Ausführungsbeispielen werden die Griffteile 5, 6, 45, 46 örtlich getrennt voneinander hergestellt, vorzugsweise im Spritzgiessverfahren, anschliessend zusammengefügt und dann in einem weiteren Spritzgiessvorgang entlang der Trennfuge 30 mit dem Kunststoffmaterial der Verbindungsnaht 22, 48 umspritzt.

Es ist aber auch denkbar, gewisse dieser Schritte örtlich zusammenzulegen. So kann z.B. zuerst ein erster Griffteil hergestellt werden. Ein zweiter Griffteil wird in einem Zweikomponenten-Spritzgusswerkzeug hergestellt und verbleibt in diesem Spritzgusswerkzeug. Der erste Griffteil wird mit dem zweiten Griffteil im Spritzgusswerkzeug zusammengefügt, z.B. mit Hilfe eines Roboters. Dann erfolgt in diesem Zweikomponenten-Spritzgusswerkzeug, gegebenenfalls nachdem die zusammengefügten Griffteile, beispielsweise mittels eines Roboters, in eine weitere Kavität des Spritzgusswerkzeuges umgesetzt worden sind, das Bilden der Verbindungsnaht durch Einspritzen des entsprechenden Kunststoffmaterials. Es ist auch möglich, den zweiten Griffteil in die weitere Kavität zu verbringen, dann den ersten Griffteil mit dem zweiten Griffteil zusammenzufügen, und danach durch Einspritzen des entsprechenden Kunststoffmaterials in diese weitere Kavität die Verbindungsnaht zu bilden.

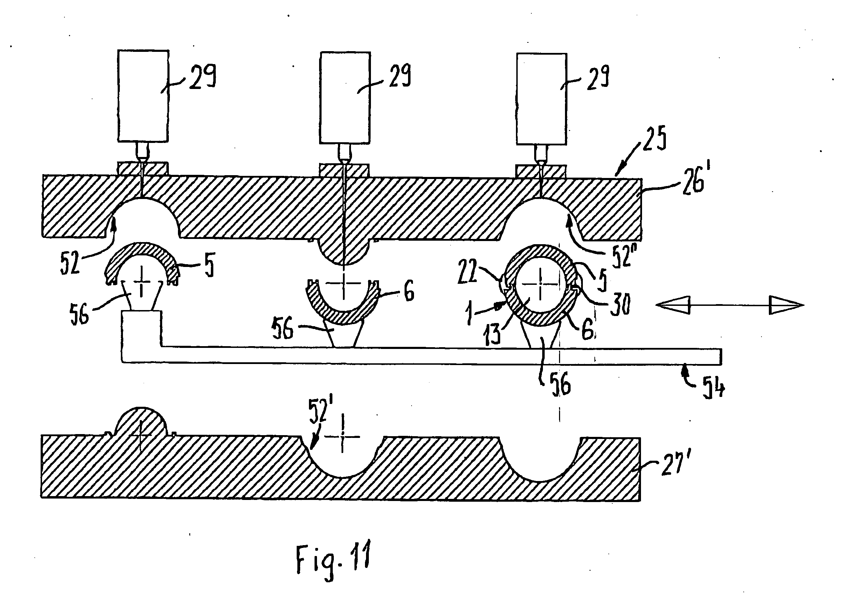

Die Herstellung der beiden Griffteile und der Verbindungsnaht kann auch am selben Ort erfolgen, d.h. in einer Mehrkomponenten-Spritzgussanlage, was anhand der Fig. 11 erläutert wird.

Fig. 11 zeigt in gleicher Darstellung wie Fig. 4 und 5 die beiden Formhälften 26' und 27' eines Dreikomponenten-Spritzgusswerkzeugs 25'. In einer ersten Kavität 52 wird - bei geschlossenem Spritzgusswerkzeug 25' - der erste Griffteil 5 durch Einspritzen des entsprechenden Kunststoffmaterials mittels der zugeordneten Spritzeinheit 29 hergestellt. Gleichzeitig wird in einer zweiten Kavität 52' des Spritzgusswerkzeugs 25' der zweite Griffteil 6 durch Einspritzen eines anderen Kunststoffmaterials mittels der zugeordneten Spritzeinheit 29 gefertigt. Schliesslich wird, ebenfalls gleichzeitig, in einer dritten Kavität 52" des Spritzgusswerkzeuges 25' die Verbindungsnaht 22 zwischen den in einem vorhergehenden Spritzzyklus hergestellten und dann zusammengefügten Griffteilen 5 und 6 durch Einspritzen eines weiteren unterschiedlichen Kunststoffmaterials mittels der zugeordneten Spritzeinheit 29 gebildet.

Mit 54 ist ein, Saugköpfe 56 für die Griffteile 5, 6 und die Zahnbürste 1 aufweisender Roboterarm bezeichnet. Bei nach einem Spritzvorgang voneinander getrennten Formhälften 26', 27' fassen die mit einer Unterdruckquelle verbindbaren Saugköpfe 56 gleichzeitig die beiden Griffteile 5, 6 und die Zahnbürste 1 und heben diese aus den entsprechenden Kavitäten 52, 52', 52".

Der erste Griffteil 5 wird dann mittels des Roboterarms 54 in die dritte Kavität 52" der Formhälfte 26' eingesetzt und durch Lüften des entsprechenden Saugkopfs 56 freigegeben. Anschliessend werden die Griffteile 5, 6 zusammengefügt, indem der Roboterarm 54 den zweiten Griffteil 6 auf den ersten Griffteil 5 aufsetzt. Durch Lüften des zugeordneten Saugkopfs 56 wird der zweite Griffteil 6 freigegeben. Nachdem der Roboterarm 54 aus dem Bereich des Spritzgusswerkzeugs 25' - auch zur Abgabe der Zahnbürste 1 - hinausbewegt worden ist, werden die beiden Formhälften 26', 27' aufeinander zu bewegt, um das Spritzgusswerkzeug 25' für den nächsten Einspritzvorgang zu schliessen.

Es ist auch möglich, die beiden Griffteile 5, 6 ausserhalb des Spritzgusswerkzeugs 25' - beispielsweise während eines Spritzvorgangs - zusammenzufügen und dann in die dritte Kavität 52" einzulegen. Diese Vorgehensweise ist vor allem dann vorteilhaft, wenn weitere Teile in den Hohlraum 13 einzubringen sind oder einer der Griffteile 5, 6 zu veredeln/bedrucken ist.

Der Vollständigkeit halber sei erwähnt, dass es selbstverständlich auch möglich ist, mehr als eine der Kavitäten 52, 52', 52" mittels einer gemeinsamen Spritzeinheit 29 zu speisen. Dies dann, wenn die Griffteile 5, 6 aus demselben Kunststoffmaterial bestehen, oder das Kunststoffmaterial für die Verbindungsnaht 22 auch zur Herstellung einer Membrane auf einer der oder beiden Griffteilen 5, 6 verwendet wird.

Selbstverständlich kann das Spritzgusswerkzeug 25' mehrere Reihen von ersten, zweiten und dritten Kavitäten 52, 52', 52" zur gleichzeitigen Herstellung mehrerer Zahnbürsten 1 aufweisen.

Für die Bildung der Verbindungsnaht 22, 48 wird wie beschrieben vorzugsweise ein weich, d.h. gummielastisch bleibender Kunststoff mit einer Shorehärte von vorzugsweise 10-70 verwendet. Es ist aber auch möglich, gleich wie für die Griff- und Halsteile einen harten Kunststoff zu verwenden.

Wenigstens der oben liegende Griffteil 5 bzw. 45 kann ganz oder bereichsweise opak oder ganz oder teilweise transparent sein.

Der Hohlraum 13, 47 im Handgriff 2, 42 kann mit einer Flüssigkeit und/oder Gegenständen gefüllt sein. Bei Zahnbürsten, wie sie in den Figuren 8 und 9 gezeigt sind, erfolgt das Füllen des Hohlraumes vor dem Spritzen der Verbindungsnaht.

Dadurch, dass die Verbindungsnaht 22, 48 aus Kunststoff besteht, kann die Verbindungsnaht durch Wahl der Farbe des Kunststoffes auch als optisches Gestaltungselement eingesetzt werden.

Im selben Spritzgiessvorgang, in welchem das Kunststoffmaterial für die Verbindungsnaht eingespritzt wird, können auch andere Bereiche des Handgriffes, des Halses oder des Bürstenkopfes , z.B. der Fingerauflagebereich oder Dichtelemente, aus diesem Kunststoffmaterial gebildet werden.

## Patentansprüche

1. Verfahren zum Herstellen eines Handgriffes (2; 42) für ein Zahnreinigungsgerät (1; 41), bei dem getrennt voneinander wenigstens zwei Griffteile (5, 6; 45, 46), von denen mindestens der eine Griffteil (5; 45) schalenförmig ausgebildet ist und einer der Griffteile (5, 6; 45, 46) veredelt oder bedruckt ist, erzeugt werden, und die wenigstens zwei Griffteile (5, 6; 45, 46) entlang einer gemeinsamen Trennfuge (30) miteinander verbunden werden, **dadurch gekennzeichnet, dass** die wenigstens zwei Griffteile (5, 6; 45, 46) in ein Spritzgusswerkzeug (25; 25') eingelegt werden und die gemeinsame Trennfuge (30) zwischen den zusammengefügten Griffteilen (5, 6; 45, 46) im Spritzgiessverfahren mit einem thermoplastischen Kunststoffmaterial, vorzugsweise einem thermoplastischen Elastomer, ausgefüllt wird, wobei das Veredeln oder Bedrucken des einen Griffteils (5, 6; 45, 46) vor dem Einlegen der Griffteile (5, 6; 45, 46) in das Spritzgusswerkzeug (25; 25') erfolgt.

2. Verfahren nach Anspruch 1, **dadurch gekennzeichnet, dass** auch andere Teile des Handgriffes (2; 42) aus dem thermoplastischen Kunststoffmaterial, mit dem die Trennfuge (30) ausgefüllt wird, gebildet werden.

3. Verfahren nach Anspruch 2, **dadurch gekennzeichnet, dass** Fingerauflagebereiche, Dichtelemente oder Membranen aus dem thermoplastischen Kunststoffmaterial, mit dem die Trennfuge (30) ausgefüllt wird, gebildet werden.

4. Verfahren nach Anspruch 2 oder 3, **dadurch gekennzeichnet, dass** das Ausfüllen der Trennfuge (30) und das Bilden der anderen Teile des Handgriffes (2; 42) im selben Spritzgiessvorgang erfolgt.

5. Verfahren nach einem der Ansprüche 2 bis 4, **dadurch gekennzeichnet, dass** das thermoplastische Kunststoffmaterial für die anderen Teile des Handgriffes (2; 42) von derselben Spritzeinheit (29) eingespritzt wird wie das thermoplastische Kunststoffmaterial zum Ausfüllen der Trennfuge (30).

6. Verfahren nach Anspruch 1, **dadurch gekennzeichnet, dass** vor dem Ausfüllen der Trennfuge (30) in den einen, schalenförmig ausgebildeten Griffteil (6, 46) Gegenstände, vorzugsweise elektrische Komponenten, eingelegt werden.

7. Verfahren nach einem der Ansprüche 1 bis 6, **dadurch gekennzeichnet, dass** die Griffteile (5, 6; 45, 46) aus Kunststoff hergestellt werden.

8. Verfahren nach Anspruch 7, **dadurch gekennzeichnet, dass** zumindest der eine Griffteil (5; 45) aus einem transparenten Kunststoff hergestellt wird.

9. Verfahren nach Anspruch 8, **dadurch gekennzeichnet, dass** zumindest der veredelte bzw. bedruckte Griffteil aus einem transparenten Kunststoff hergestellt wird.

10. Verfahren nach einem der Ansprüche 1 bis 9, **dadurch gekennzeichnet, dass** ein thermoplastisches Kunststoffmaterial mit einer Shorehärte von 10 - 70 verwendet wird.

11. Verfahren nach einem der Ansprüche 1 bis 10, **dadurch gekennzeichnet, dass** mindestens einer der Griffteile (5, 6; 45, 46) mit Ausnehmungen (35, 36) versehen wird, die beim Ausfüllen der Trennfuge (30) mit dem thermoplastischen Kunststoffmaterial gefüllt werden.

12. Verfahren nach einem der Ansprüche 1 bis 11, **dadurch gekennzeichnet, dass** die Griffteile (5', 6') vor dem Ausfüllen der Trennfuge (30) mittels Zentrier- oder Halteanordnungen (40) zusammengehalten werden.

13. Verfahren nach einem der Ansprüche 1 bis 12, **dadurch gekennzeichnet, dass** durch die zusammengefügten Griffteile (5, 6; 45, 46) ein Hohlraum (13; 47) gebildet wird.

14. Verfahren nach einem der Ansprüche 1 bis 13, **dadurch gekennzeichnet, dass** die zusammengefügten Griffteile (45, 46) vor dem Ausfüllen der Trennfuge (30) durch mechanische Mittel gegenseitig positioniert und zusammengehalten werden.

15. Verfahren nach einem der Ansprüche 1 bis 14, **dadurch gekennzeichnet, dass** für wenigstens den einen der zwei Griffteile (5, 6; 45, 46) ein Kunststoff verwendet wird, der mit dem thermoplastischen Kunststoffmaterial der Trennfuge (30) eine Materialverbindung eingeht.

16. Verfahren nach Anspruch 15, **dadurch gekennzeichnet, dass** für beide Griffteile (5, 6; 45, 46) Kunststoffe verwendet werden, die mit dem thermoplastischen Kunststoffmaterial der Trennfuge (30) eine Materialverbindung eingehen.

17. Verfahren nach Anspruch 1, **dadurch gekennzeichnet, dass** für einen der Griffteile (5, 6; 45, 46) ein anderes Material als Kunststoff gewählt wird, z.B. Holz oder Metall.

18. Verfahren nach einem der Ansprüche 1 bis 17, **dadurch gekennzeichnet, dass** die Griffteile (5, 6; 45, 46) mit im zusammengefügten Zustand miteinander fluchtenden Durchlässen (39) versehen werden, die beim Ausfüllen der Trennfuge (30) mit dem thermoplastischen Kunststoffmaterial gefüllt werden.

19. Verfahren nach einem der Ansprüche 1 bis 18, **dadurch gekennzeichnet, dass** Griffteile (5, 6; 45, 46) hergestellt werden, die unterschiedliche Formen haben.

20. Verfahren nach einem der Ansprüche 1 bis 19, **dadurch gekennzeichnet, dass** die Trennfuge (30) durch ebene Endflächen (5a, 6a), die an den Griffteilen (5, 6; 45, 46) ausgebildet werden, festgelegt wird.

21. Verfahren nach Anspruch 7, **dadurch gekennzeichnet, dass** der oben liegende Griffteil (5; 45) ganz oder teilweise aus einem transparenten Kunststoff hergestellt wird.

22. Verfahren nach Anspruch 14, **dadurch gekennzeichnet, dass** die zusammengefügten Griffteile (45, 46) vor dem Ausfüllen der Trennfuge (30) mittels einer Steckverbindung (49, 50) gegenseitig positioniert und zusammengehalten werden, die durch vom einen Griffteil (45) abstehende stiftartige Nocken (49) und am andern Griffteil (46) vorgesehene Öffnungen (50), in die die Nocken (49) eingreifen, gebildet wird.

23. Handgriff (2; 41) für ein Zahnreinigungsgerät (1; 41), insbesondere hergestellt nach dem Verfahren gemäss einem oder mehreren der Ansprüche 1-22, der aus mindestens zwei in getrennten Schritten hergestellten und zusammengefügten Griffteilen (5, 6; 45, 46), von denen mindestens der eine Griffteil (5; 45) schalenförmig ausgebildet und einer der Griffteile (5, 6; 45, 46) veredelt oder bedruckt ist, besteht, die entlang einer gemeinsamen Trennfuge (30) miteinander verbunden sind, **dadurch gekennzeichnet, dass** die gemeinsame Trennfuge (30) zwischen den zusammengefügten Griffteilen (5, 6; 45, 46) mit einem im Spritzgiessverfahren eingebrachten, thermoplastischen Kunststoffmaterial, vorzugsweise einem thermoplastischen Elastomer, ausgefüllt ist.

24. Handgriff nach Anspruch 23, **dadurch gekennzeichnet, dass** auch andere Teile des Handgriffes (2; 42) aus dem thermoplastischen Kunststoffmaterial, mit dem die Trennfuge (30) ausgefüllt ist, gebildet sind.

25. Handgriff nach Anspruch 24, **dadurch gekennzeichnet, dass** Fingerauflagebereiche, Dichtelemente oder Membranen aus dem thermoplastischen Kunststoffmaterial, mit dem die Trennfuge (30) ausgefüllt ist, gebildet sind.

26. Handgriff nach Anspruch 23, **dadurch gekennzeichnet, dass** in den einen, schalenförmig ausgebildeten Griffteil (6, 46) Gegenstände, vorzugsweise elektrische Komponenten, eingelegt sind.

27. Handgriff nach einem der Ansprüche 23 bis 26 **dadurch gekennzeichnet, dass** die Griffteile (5, 6; 45, 46) aus Kunststoff bestehen.

28. Handgriff nach Anspruch 27, **dadurch gekennzeichnet, dass** zumindest der eine Griffteil (5; 45) aus einem transparenten Kunststoff besteht.

29. Handgriff nach Anspruch 28, **dadurch gekennzeichnet, dass** zumindest der veredelte bzw. bedruckte Griffteil aus einem transparenten Kunststoff besteht.

30. Handgriff nach einem der Ansprüche 23 bis 29, **dadurch gekennzeichnet, dass** das thermoplastische Kunststoffmaterial eine Shorehärte von 10 - 70 hat.

31. Handgriff nach einem der Ansprüche 23 bis 30, **dadurch gekennzeichnet, dass** mindestens einer der Griffteile (5, 6; 45, 46) mit Ausnehmungen (35, 36) versehen ist, die mit dem thermoplastischen Kunststoffmaterial gefüllt sind.

32. Handgriff nach einem der Ansprüche 23 bis 31, **dadurch gekennzeichnet, dass** die Griffteile (5', 6') mittels Zentrier- oder Halteanordnungen (40) zusammengehalten sind.

33. Handgriff nach einem der Ansprüche 23 bis 32, **dadurch gekennzeichnet, dass** die zusammengefügten Griffteile (5, 6; 45, 46) einen Hohlraum (13; 47) bilden.

34. Handgriff nach einem der Ansprüche 23 bis 33, **dadurch gekennzeichnet, dass** die zusammengefügten Griffteile (45, 46) durch mechanische Mittel gegenseitig positioniert und zusammengehalten sind.

35. Handgriff nach einem der Ansprüche 23 bis 34, **dadurch gekennzeichnet, dass** wenigstens der eine der zwei Griffteile (5, 6; 45, 46) aus einem Kunststoff besteht, der mit dem thermoplastischen. Kunststoffmaterial der Trennfuge (30) eine Materialverbindung eingeht.

36. Handgriff nach Anspruch 35, **dadurch gekennzeichnet, dass** beide Griffteile (5, 6; 45, 46) aus einem Kunststoff bestehen, der mit dem thermoplastischen Kunststoffmaterial der Trennfuge (30) eine Materialverbindung eingeht.

37. Handgriff nach Anspruch 23, **dadurch gekennzeichnet, dass** einer der Griffteile (5, 6; 45, 46) aus einem anderen Material als Kunststoff besteht, z.B. aus Holz oder Metall.

38. Handgriff nach einem der Ansprüche 23 bis 37 für ein elektrisch angetriebenes Zahnreinigungsgerät (1), **dadurch gekennzeichnet, dass** im durch die Griffteile (5, 6) gebildeten Hohlraum (13) zum Antrieb gehörende Elemente (16, 19, 20) und/oder eine Batterie untergebracht sind.

39. Handgriff nach einem der Ansprüche 23 bis 38, **dadurch gekennzeichnet, dass** die zusammengefügten Griffteile (5, 6; 45, 46) mit miteinander fluchtenden Durchlässen (39) versehen sind, die mit dem thermoplastischen Kunststoffmaterial gefüllt sind.

40. Handgriff nach einem der Ansprüche 23 bis 39, **dadurch gekennzeichnet, dass** die Griffteile (5, 6; 45, 46) unterschiedliche Formen haben.

41. Handgriff nach einem der Ansprüche 23 bis 40, **dadurch gekennzeichnet, dass** die Trennfuge (30) durch ebene Endflächen (5a, 6a), die an den Griffteilen (5, 6; 45, 46) ausgebildet sind, festgelegt ist.

42. Handgriff nach Anspruch 27, **dadurch gekennzeichnet, dass** der oben liegende Griffteil (5; 45) ganz oder teilweise aus einem transparenten Kunststoff besteht.

43. Handgriff nach Anspruch 34, **dadurch gekennzeichnet, dass** die zusammengefügten Griffteile (45, 46) mittels einer Steckverbindung (49, 50) gegenseitig positioniert und zusammengehalten sind, die durch vom einen Griffteil (45) abstehende stiftartige Nocken (49) und am andern Griffteil (46) vorgesehene Öffnungen (50), in die die Nocken (49) eingreifen, gebildet ist.

## Claims

1. Method for producing a handle (2; 42) for a teeth cleaning device (1; 41), in which at least two handle parts (5, 6; 45, 46), of which at least one handle part (5; 45) is formed in a shell-shaped manner and one of the handle parts (5, 6; 45, 46) is embellished or imprinted, are produced separately from one another, and the at least two handle parts (5, 6; 45, 46) are connected to each other along a common parting line (30), **characterized in that** the at least two handle parts (5, 6; 45, 46) are introduced into an injection mold (25; 25') and the common parting line (30) between the joined-together handle parts (5, 6; 45, 46) is filled, in the injection-molding operation, with a thermoplastic material, preferably a thermoplastic elastomer, the embellishing or imprinting of the one handle part (5, 6; 45, 46) taking place before the handle parts (5, 6; 45, 46) are introduced into the injection mold (25; 25').

2. Method according to Claim 1, **characterized in that** other parts of the handle (2; 42) are also formed from the thermoplastic material with which the parting line (30) is filled.

3. Method according to Claim 2, **characterized in that** finger rest areas, sealing elements or membranes are formed from the thermoplastic material with which the parting line (30) is filled.

4. Method according to Claim 2 or 3, **characterized in that** the filling of the parting line (30) and the formation of the other parts of the handle (2; 42) take place in the same injection-molding operation.

5. Method according to one of Claims 2 to 4, **characterized in that** the thermoplastic material for the other parts of the handle (2; 42) is injected from the same injection unit (29) as the thermoplastic material for filling the parting line (30).

6. Method according to Claim 1, **characterized in that**, before the parting line (30) is filled, articles, preferably electrical components, are introduced into the one shell-shaped handle part (6, 46).

7. Method according to one of Claims 1 to 6, **characterized in that** the handle parts (5, 6; 45, 46) are made from plastic.

8. Method according to Claim 7, **characterized in that** at least one handle part (5; 45) is made from a transparent plastic.

9. Method according to Claim 8, **characterized in that** at least the embellished or imprinted handle part is made from a transparent plastic.

10. Method according to one of Claims 1 to 9, **characterized in that** a thermoplastic material with a Shore hardness of 10 - 70 is used.

11. Method according to one of Claims 1 to 10, **characterized in that** at least one of the handle parts (5, 6; 45, 46) is provided with recesses (35, 36) which are filled with the thermoplastic material during filling of the parting line (30).

12. Method according to one of Claims 1 to 11, **characterized in that** the handle parts (5', 6') are held together by means of centering or holding devices (40) prior to the filling of the parting line (30).

13. Method according to one of Claims 1 to 12, **characterized in that** a hollow space (13; 47) is formed by the joined-together handle parts (5, 6; 45, 46).

14. Method according to one of Claims 1 to 13, **characterized in that**, before the parting line (30) is filled, the joined-together handle parts (45, 46) are positioned in relation to each other and held together by mechanical means.

15. Method according to one of Claims 1 to 14, **characterized in that**, for at least one of the two handle parts (5, 6; 45, 46), a plastic is used which enters into a material bond with the thermoplastic material of the parting line (30).

16. Method according to Claim 15, **characterized in that**, for both handle parts (5, 6; 45, 46), plastics are used which enter into a material bond with the thermoplastic material of the parting line (30).

17. Method according to Claim 1, **characterized in that**, for one of the handle parts (5, 6; 45, 46), another material than plastic is chosen, for example wood or metal.

18. Method according to one of Claims 1 to 17, **characterized in that** the handle parts (5, 6; 45, 46) are provided with passages (39) which are flush with one another in the joined-together state and which are filled with the thermoplastic material during the filling of the parting line (30).

19. Method according to one of Claims 1 to 18, **characterized in that** handle parts (5, 6; 45, 46) are produced which have different shapes.

20. Method according to one of Claims 1 to 19, **characterized in that** the parting line (30) is defined by plane end faces (5a, 6a) which are formed on the handle parts (5, 6; 45, 46).

21. Method according to Claim 7, **characterized in that** the upper handle part (5; 45) is made completely or partially from a transparent plastic.

22. Method according to Claim 14, **characterized in that**, before the parting line (30) is filled, the joined-together handle parts (45, 46) are positioned in relation to each other and held together by means of a plug connection (49, 50) formed by pin-like cams (49) protruding from one handle part (45), and by openings (50) which are provided on the other handle part (46) and into which the cams (49) engage.

23. Handle (2; 41) for a teeth cleaning device (1; 41), in particular produced by the method according to one or more of Claims 1-22, which handle (2; 41) is composed of at least two handle parts (5, 6; 45, 46) which are produced in separate steps and joined together, of which at least one handle part (5; 45) is formed in a shell-shaped manner and one of the handle parts (5, 6; 45, 46) is embellished or imprinted, and which are connected to each other along a common parting line (30), **characterized in that** the common parting line (30) between the joined-together handle parts (5, 6; 45, 46) is filled with a thermoplastic material, preferably a thermoplastic elastomer, introduced in the injection-molding operation.

24. Handle according to Claim 23, **characterized in that** other parts of the handle (2; 42) are also formed from the thermoplastic material with which the parting line (30) is filled.

25. Handle according to Claim 24, **characterized in that** finger rest areas, sealing elements or membranes are formed from the thermoplastic material with which the parting line (30) is filled.

26. Handle according to Claim 23, **characterized in that** articles, preferably electrical components, are introduced into the one shell-shaped handle part (6, 46).

27. Handle according to one of Claims 23 to 26, **characterized in that** the handle parts (5, 6; 45, 46) are made from plastic.

28. Handle according to Claim 27, **characterized in that** at least one handle part (5; 45) is made from a transparent plastic.

29. Handle according to Claim 28, **characterized in that** at least the embellished or imprinted handle part is made from a transparent plastic.

30. Handle according to one of Claims 23 to 29, **characterized in that** the thermoplastic material has a Shore hardness of 10 - 70.

31. Handle according to one of Claims 23 to 30, **characterized in that** at least one of the handle parts (5, 6; 45, 46) is provided with recesses (35, 36) which are filled with the thermoplastic material.

32. Handle according to one of Claims 23 to 31, **characterized in that** the handle parts (5', 6') are held together by means of centering or holding devices (40).

33. Handle according to one of Claims 23 to 32, **characterized in that** the joined-together handle parts (5, 6; 45, 46) form a hollow space (13; 47).

34. Handle according to one of Claims 23 to 33, **characterized in that** the joined-together handle parts (45, 46) are positioned in relation to each other and held together by mechanical means.

35. Handle according to one of Claims 23 to 34, **characterized in that** at least one of the two handle parts (5, 6; 45, 46) is made from a plastic which enters into a material bond with the thermoplastic material of the parting line (30).

36. Handle according to Claim 35, **characterized in that** both handle parts (5, 6; 45, 46) are made from a plastic which enters into a material bond with the thermoplastic material of the parting line (30).

37. Handle according to Claim 23, **characterized in that** one of the handle parts (5, 6; 45, 46) is made from another material than plastic, for example from wood or metal.

38. Handle according to one of Claims 23 to 37 for an electrically operated teeth cleaning device (1), **characterized in that** elements (16, 19, 20) belonging to the drive and/or a battery are accommodated in the hollow space (13) formed by the handle parts (5, 6).

39. Handle according to one of Claims 23 to 38, **characterized in that** the joined-together handle parts (5, 6; 45, 46) are provided with passages (39) which are flush with one another and which are filled with the thermoplastic material.

40. Handle according to one of Claims 23 to 39, **characterized in that** the handle parts (5, 6; 45, 46) have different shapes.

41. Handle according to one of Claims 23 to 40, **characterized in that** the parting line (30) is defined by plane end faces (5a, 6a) which are formed on the handle parts (5, 6; 45, 46).

42. Handle according to Claim 27, **characterized in that** the upper handle part (5; 45) is made completely or partially from a transparent plastic.

43. Handle according to Claim 34, **characterized in that** the joined-together handle parts (45, 46) are positioned in relation to each other and held together by means of a plug connection (49, 50) formed by pin-like cams (49) protruding from one handle part (45), and by openings (50) which are provided on the other handle part (46) and into which the cams (49) engage.

## Revendications

1. Procédé de production d'un manche (2; 42) pour un instrument (1; 41) de nettoyage des dents, dans lequel au moins deux parties de manche (5, 6; 45, 46) séparées l'une de l'autre et dont au moins une partie de manche (5; 45) est configurée en forme de coquille et une des parties de manche (5, 6; 45, 46) reçoit une finition ou une impression sont formées,
les deux ou plusieurs parties de manche (5, 6; 45, 46) étant reliées l'une à l'autre le long d'un joint de jonction commun (30),
**caractérisé en ce que**
les deux ou plusieurs parties de manche (5, 6; 45, 46) sont placées dans un outil (25; 25') de moulage par injection et le joint (30) de jonction commune entre les parties de manche (5, 6; 45, 46) rejointes est rempli dans l'opération de moulage par injection d'une matière synthétique thermoplastique, de préférence un élastomère thermoplastique, la finition ou l'impression d'une des parties de manche (5, 6; 45, 46) étant réalisées avant l'insertion des parties de manche (5, 6; 45, 46) dans l'outil (25; 25') du moulage par injection.

2. Procédé selon la revendication 1, **caractérisé en ce que** d'autres parties de manche (2; 42) sont également formées de la matière synthétique thermoplastique de laquelle le joint de jonction (30) est rempli.

3. Procédé selon la revendication 2, **caractérisé en ce que** des parties de pose des doigts, des éléments d'étanchéité ou des membranes sont formées en la matière synthétique thermoplastique de laquelle le joint de jonction (30) est rempli.

4. Procédé selon les revendications 2 ou 3, **caractérisé en ce que** le remplissage du joint de jonction (30) et la formation des autres parties de manche (2; 42) s'effectuent dans la même opération de moulage par injection.

5. Procédé selon l'une des revendications 2 à 4, **caractérisé en ce que** la matière synthétique thermoplastique prévue pour les autres parties de manche (2; 42) est injectée par la même unité d'injection (29) que celle utilisée pour la matière synthétique thermoplastique qui remplit le joint de jonction (30).

6. Procédé selon la revendication 1, **caractérisé en ce qu'**avant le remplissage du joint de jonction (30) de la partie de manche (6, 46) configurée en coquille, des objets, de préférence des composants électriques, y sont placés.

7. Procédé selon l'une des revendications 1 à 6, **caractérisé en ce que** les parties de manche (5, 6; 45, 46) sont réalisées en matière synthétique.

8. Procédé selon la revendication 7, **caractérisé en ce qu'**au moins l'une des parties de manche (5; 45) est réalisée en une matière synthétique transparente.

9. Procédé selon la revendication 8, **caractérisé en ce qu'**au moins la partie de manche ayant reçu une finition ou une impression est réalisée en une matière synthétique transparente.

10. Procédé selon l'une des revendications 1 à 9, **caractérisé en ce qu'**il utilise une matière synthétique thermoplastique dont la dureté Shore est comprise entre 10 et 70.

11. Procédé selon l'une des revendications 1 à 10, **caractérisé en ce qu'**au moins l'une des parties de manche (5, 6; 45, 46) est dotée de découpes (35, 36) qui sont remplies par la matière synthétique thermoplastique lors du remplissage du joint de jonction (30).

12. Procédé selon l'une des revendications 1 à 11, **caractérisé en ce qu'**avant le remplissage du joint de jonction (30), les parties de manche (5', 6') sont maintenues ensemble au moyen de systèmes de centrage ou de maintien (40).

13. Procédé selon l'une des revendications 1 à 12, **caractérisé en ce qu'**une cavité (13; 47) est formée par les parties de manche (5, 6; 45, 46) assemblées.

14. Procédé selon l'une des revendications 1 à 13, **caractérisé en ce qu'**avant le remplissage du joint de jonction (30), les parties de manche (45, 46) assemblées sont positionnées l'une par rapport à l'autre et maintenues ensemble.

15. Procédé selon l'une des revendications 1 à 14, **caractérisé en ce que** pour au moins une des deux parties de manche (5, 6; 45, 46), on utilise une matière synthétique qui établit une liaison matérielle avec la matière synthétique thermoplastique du joint de jonction (30).

16. Procédé selon la revendication 15, **caractérisé en ce que** pour les deux parties de manche (5, 6; 45, 46), on utilise des matières synthétiques qui établissent une liaison matérielle avec la matière synthétique thermoplastique du joint de jonction (30).

17. Procédé selon la revendication 1, **caractérisé en ce que** pour l'une des parties de manche (5, 6; 45, 46), on utilise un matériau autre qu'une matière synthétique, par exemple du bois ou un métal.

18. Procédé selon l'une des revendications 1 à 17, **caractérisé en ce que** les parties de manche (5, 6; 45, 46) sont dotées de passages (39) alignés l'un sur l'autre à l'état assemblé et remplis de la matière synthétique thermoplastique lors du remplissage du joint de jonction (30).

19. Procédé selon l'une des revendications 1 à 18, **caractérisé en ce que** l'on fabrique des parties de manche (5, 6; 45, 46) qui ont des formes différentes.

20. Procédé selon l'une des revendications 1 à 19, **caractérisé en ce que** le joint de jonction (30) est défini par des surfaces d'extrémité (5a, 6a) planes qui sont formées sur les parties de manche (5, 6; 45, 46).

21. Procédé selon la revendication 7, **caractérisé en ce que** la partie de manche (5, 45) située au-dessus est réalisée en tout ou en partie en une matière synthétique transparente.

22. Procédé selon la revendication 14, **caractérisé en ce qu'**avant le remplissage du joint de jonction (30), les parties de manche (45, 46) assemblées sont positionnées l'une par rapport à l'autre et maintenues ensemble au moyen d'une liaison enfichable (49, 50), la liaison enfichable étant formée par des appendices (49) en forme de tige qui débordent d'une partie de manche (45) et des ouvertures (50) prévues sur l'autre partie de manche (46) et dans lesquelles s'engagent les appendices (49).

23. Manche (2; 41) pour appareil (1; 41) de nettoyage des dents, fabriqué en particulier avec le procédé selon l'une ou plusieurs des revendications 1 à 22 et constitué d'au moins deux parties de manche (5, 6; 45, 46) fabriquées et assemblées en des étapes séparées, parmi lesquelles au moins une partie de manche (5; 45) a la forme d'une coquille et une des parties de manche (5, 6; 45, 46) reçoit une finition ou une impression, et reliées l'une à l'autre le long d'un joint de jonction commun (30),
**caractérisée en ce que**
le joint de jonction commun (30) situé entre les parties de manche (5, 6; 45, 46) assemblées est rempli par une matière synthétique thermoplastique, de préférence un élastomère thermoplastique, apportée dans une opération de moulage par injection.

24. Manche selon la revendication 23, **caractérisé en ce que** d'autres parties du manche (2; 42) sont formées dans la matière synthétique thermoplastique utilisée pour remplir le joint de jonction (30).

25. Manche selon la revendication 24, **caractérisé en ce que** des parties de pose des doigts, des éléments d'étanchéité ou des membranes sont formées en la matière synthétique thermoplastique de laquelle le joint de jonction (30) est rempli.

26. Manche selon la revendication 23, **caractérisé en ce que** des objets, de préférence des composants électriques, sont placés dans la partie de manche (6, 46) configurée en coquille.

27. Manche selon l'une des revendications 23 à 26, **caractérisé en ce que** les parties de manche (5, 6; 45, 46) sont réalisées en matière synthétique.

28. Manche selon la revendication 27, **caractérisé en ce que caractérisé en ce qu'**au moins l'une des parties de manche (5; 45) est réalisée en une matière synthétique transparente.

29. Manche selon la revendication 28, **caractérisé en ce que caractérisé en ce qu'**au moins la partie de manche ayant reçu une finition ou une impression est réalisée en une matière synthétique transparente.

30. Manche selon l'une des revendications 23 à 29, **caractérisé en ce qu'**il utilise une matière synthétique thermoplastique dont la dureté Shore est comprise entre 10 et 70.

31. Manche selon l'une des revendications 23 à 30, **caractérisé en ce qu'**au moins l'une des parties de manche (5, 6; 45, 46) est dotée de découpes (35, 36) remplies de la matière synthétique thermoplastique.

32. Manche selon l'une des revendications 23 à 31, **caractérisée en ce que** les parties de manche (5', 6') sont maintenues ensemble au moyen de systèmes de centrage ou de maintien (40).

33. Manche selon l'une des revendications 23 à 32, **caractérisé en ce que** les parties de manche (5, 6; 45, 46) assemblées forment une cavité (13; 47).

34. Manche selon l'une des revendications 23 à 33, **caractérisé en ce que** les parties de manche (45, 46) assemblées sont positionnées l'une par rapport à l'autre et assemblées par des moyens mécaniques.

35. Manche selon l'une des revendications 23 à 34, **caractérisé en ce qu'**au moins l'une des deux parties de manche (5, 6; 45, 46) est constituée d'une matière synthétique qui établit une liaison matérielle avec la matière synthétique thermoplastique du joint de jonction (30).

36. Manche selon la revendication 35, **caractérisé en ce que** les deux parties de manche (5, 6; 45, 46) sont constituées d'une matière synthétique qui établit une liaison matérielle avec la matière synthétique thermoplastique du joint de jonction (30).

37. Manche selon la revendication 23, **caractérisé en ce qu'**une des parties de manche (5, 6; 45, 46) est constituée d'un matériau autre qu'une matière synthétique, par exemple du bois ou un métal.

38. Manche selon l'une des revendications 23 à 37 pour appareil (1) de nettoyage des dents à entraînement électrique, **caractérisé en ce que** des éléments (16, 19, 20) qui font partie de l'entraînement et/ou une batterie sont installés dans la cavité (13) formée par les parties de manche (5, 6).

39. Manche selon l'une des revendications 23 à 38, **caractérisé en ce que** les parties de manche (5, 6; 45, 46) sont dotées de passages (39) alignes l'un sur l'autre à l'état assemblé et remplis de la matière synthétique thermoplastique.

40. Manche selon l'une des revendications 23 à 39, **caractérisé en ce que** l'on fabrique des parties de manche (5, 6; 45, 46) qui ont des formes différentes.

41. Manche selon l'une des revendications 23 à 40, **caractérisé en ce que** le joint de jonction (30) est défini par des surfaces d'extrémité (5a, 6a) planes qui sont formées sur les parties de manche (5, 6; 45, 46).

42. Manche selon la revendication 27, **caractérisé en ce que** la partie de manche (5; 45) située au-dessus est constituée totalement ou partiellement d'une matière synthétique transparente.

43. Manche selon la revendication 34, **caractérisé en ce que** ce que les parties de manche (45, 46) assemblées sont positionnées l'une par rapport à l'autre et maintenues ensemble au moyen d'une liaison enfichable (49, 50), la liaison enfichable étant formée par un appendice (49) en forme de tige qui déborde d'une partie de manche (45) et des ouvertures (50) prévues sur l'autre partie de manche (46) et dans lesquelles s'engagent les appendices (49).
